# EUROPEAN PATENT SPECIFICATION

(11) **EP 2 053 082 B1**
(45) Date of publication and mention of the grant of the patent: **10.07.2019**
(21) Application number: 08167501.9
(22) Date of filing: 24.10.2008
(51) Int. Cl.: C08J 9/30, E04B 1/68, C09K 3/30

(54) **Weather-resistive barrier for buildings**
Wetterbeständige Gebäudeabdichtung
Revêtement résistant aux intempéries pour bâtiments

(30) Priority: 26.10.2007 US 486 P; 23.10.2008 US 288829
(43) Date of publication of application: 29.04.2009
(73) Proprietor: Rohm and Haas Company, Philadelphia, PA 19106-2399 (US)
(72) Inventor: Bowe, Michael Damien, Doylestown, PA 18901 (US); Crerar, Iain, Medfield, MA 02052 (US); Szewczyk, Janah Cecelia, Philadelphia, PA 19143 (US)
(74) Representative: Houghton, Mark Phillip

(56) References cited:
- DE-A1- 3 728 397
- US-A- 4 350 774

## Description

This invention relates to a method for making a weather-resistive barrier for buildings.

Many buildings are constructed with exterior wood, cement or gypsum-based sheets that are overlaid with decorative facades or claddings (e.g., wood, aluminum or vinyl sidings). When such a building is under construction, in many cases, a flexible sheeting material (e.g., Tyvek from DuPont, felt or tar paper) is nailed or stapled to the construction sheathing before the cladding is mounted. Such sheeting material provides some protection while the building is under construction, as well as after the cladding is mounted. Such protection includes a resistance against wind and liquid water penetration.

Such flexible sheeting, however, is labor intensive to apply because the sheeting material must be unrolled and stretched over the area to be covered by hand, then nailed or stapled into place. And it is not a very good wind or water barrier. As the sheeting material involves placing sheets side by side with some overlap of the sheets, adjacent sheets are not typically sealed together, allowing for wind to enter between the overlaps. Water can also enter the overlaps, and even can enter behind the flexible sheeting through nail or staple holes.

Some have suggested using liquid coatings on the wood, cement or gypsum sheathing, and using tapes on the joints between adjacent sheets in order to bridge the gaps between adjacent sheets. Such tapes often require a separate coating that must be applied with a trowel or scraper that dries to form a hard sealant over the tape. This taping and coating process is quite labor intensive.

Latex foams have been used as sealants and caulks around windows in houses under construction. Typically, such foams are dispensed from cans and expand upon application. Also, foams are designed to fit in tight slots and not over joints with open space on one side. As such, these foams tend not to adhere well to wood or gypsum sheathing, leaving joints unevenly covered. When such foams dry, however, they are difficult to compress such that they are typically not used to seal joints between sheathing sheets since the expanded foam does not compress when cladding is applied, causing cladding to buckle or ripple outwardly from the building.

US 4350774 discloses a composition suitable for preparing a stable cellular foam and its use to caulk and insulate, the composition comprising an emulsion of one or more foamable polymers, a foam forming amount of a mixture of a volatile organic liquid compound and nitrous oxide.

DE 3728397 discloses a fire-resistant material which comprises polymer from a polymer dispersion, hydraulic binder, hydrated filler, melamines and, if desired, other fillers and which has a foam-like structure which is based on the polymer dispersion.

This invention is a method of making a weather-resistive barrier on a building under construction that employs adjacent sheets of wood, cement or gypsum exterior sheathing on a structural frame with gaps between the sheets, comprising:
(a) applying a foamed aqueous emulsion polymer composition to the gaps wherein the composition comprises one or more aqueous emulsion polymer selected from any of acrylics, vinyl acetate-acrylics, styrene-acrylics, ethylene-vinyl acetates, styrene-butadienes and polyurethane dispersions, a surfactant, water and a blowing agent wherein a wet, freshly applied 12 mm thick and 50 mm wide band of the foamed composition has the ability when dried to be compressed to a thickness of not more than 3 mm under a stress of not more than 0.035 MPa; and
(b) applying an aqueous polymeric coating composition comprising a polymer chosen from any of acrylics, vinyl acetate-acrylics, styrene-acrylics, ethylene-vinyl acetates, styrene-butadienes and polyurethane dispersions over the sheathing and the foamed composition wherein the polymeric coating has a density when dried of greater than 0.7 g/ml;
   wherein the one or more polymer in the foamed composition (a) consists essentially of an aqueous emulsion polymer with a Tg less than 25°C.

Foamed composition (a) and coating composition (b) can comprise the same one or more polymer, i.e. the same polymer or polymer mixture.

The method of this invention further comprises installing a decorative cladding over the coated sheathing.

The foamed composition is flexible, such that after drying at least one day, a foam strip formed on a mesh backing can be wrapped around a cylindrical metal mandrel with a diameter of 100 mm without cracking. For cold weather applications, a suitable foamed composition (a) can, after drying at least one day, be formed into a foam strip comprising a mesh backing and wrapped around cylindrical metal mandrel with a diameter of 50 mm without cracking.

Preferably, the foamed composition (a) has the ability when dried to be compressed to a thickness of not more than 3 mm under a stress of no more than 0.0035 MPa. In one embodiment, the foamed composition (a) has the ability to self-compress to not more than 3 mm under no externally applied stress.

Preferably, the composition (b) further comprises a polyfunctional amine or a polyethyleneimine to facilitate skinning of the composition so as to resist rain while the composition is drying, or to allow further coatings to be more quickly applied over those compositions.

The one or more polymer in foamed composition (a) consists essentially of an aqueous emulsion polymer with a Tg less than 25°C. Accordingly, the foamed composition (a) does not comprise any polymer having a Tg more than 25°C.

Specifically for the coating component (b), it may be desired to cause faster setting or skinning than would otherwise occur by drying. This may be advantageous in preventing a recently applied but incompletely dried weather resistive barrier from being washed off by a sudden rainstorm. Accelerated setting or skinning can be achieved by including in the formulation a polyfunctional amine as disclosed in U.S. Patent No. 5,804,627 (Rohm and Haas) or a polyethyleneimine as disclosed U.S. Patent No. 6,376,574 (Dow).

The coating composition (b) should be selected so as to allow for an appropriate water vapor transmission for the building. Depending on the climate, the capacity of a building's heating, ventilation and air conditioning (HVAC) system, the material of construction of the entire building and other factors known to building scientists, the coating component (b) should be chosen to give a finished weather resistive barrier with an appropriate water vapor transmission rate to reduce any moisture condensation in the walls of the building. This vapor transmission rate is most often measured according to ASTM E-96 and expressed in units of perms, where higher perms correlate with a greater rate of water vapor transmission. OSB, a common sheathing material, has approx 3-6 perms. For a home, in which interior moisture from cooking and bathing is generated, a weather resistive barrier (b) with > 10 perms may be desired, so that any moisture which reaches the OSB is not unduly inhibited from diffusing through the barrier (b) to the exterior.

By contrast, commercial buildings usually have higher capacity HVACs, that can remove sufficient moisture from the interior so that water does not condense in the walls. Thus, a low perm weather resistive barrier may be preferred. One skilled in the art of coating formulation can make coatings with a desired perm value, measuring candidate coating compositions (b) according to ASTM E-96. Furthermore, commercially available coatings are sometimes provided with a perm data, which can aid in the selection of a coating properly matched to the building science teachings.

Some suitable composition for the coating component (b) include:.
- Rhoplex™ EC-2540 (a flexible, acrylic polymer emulsion) without any further additives.
- A blend of 90 parts Rhoplex™ EC-2540 / 10 parts Ropaque™ Ultra E (a non film forming polymer which provides coating opacity).
- Sto Gold Coat (a yellow coating based on styrene-acrylic copolymer, with 5.7 Perms) from Sto Corp of Atlanta, GA.
- Henry Airbloc 33 (a black coating based on acrylic copolymer, with 11.6 Perms) from Henry Inc. of Huntington Park, Ca.

A suitable composition (b) is given in Example 16 below.

Coating composition (b) can be applied by spray equipment, brush or roller.

Aqueous polymers and copolymers suitable for both the foam aqueous component (a) and for the coating component (b) used in this invention can be acrylic class or vinyl acetate-acrylic class of polymers, as shown in the examples. Other classes of polymers are also suitable, such as styrene-acrylics (e.g. Rhoplex™ 2019R from Rohm and Haas or Acronal S-400 from BASF); ethylene-vinyl acetates, styrene-butadienes, and polyurethane dispersions, examples of which are described in U.S. Patent No. 7,179,845 (Fomo Products Inc.). Useful acrylic emulsion polymers include Rhoplex™ EC-2540, Rhoplex™ EC-1791 QS, Rhoplex™ MC-1834, Rhoplex™ AC-630. Rovace™ 9100 is an acrylic-vinyl acetate copolymer. The Rhoplex and Rovance polymers are available from Rohm and Haas Co. of Philadelphia, PA.

"Glass transition temperature" or "Tg" means the mid-point glass transition temperature of a polymer as determined by differential scanning calorimetry (DSC"), in accordance with ASTM E-1356-91 where samples are run on a TA Instruments Q-1000 DSC at a ramp rate of between 10° to 20°C/min., in a nitrogen atmosphere, from -90°C to 150°C (twice). The midpoint inflection was taken from the second heating. When we say that a polymer has a Tg of greater than a stated value, we mean that the midpoint of the single inflection point in the DSC curve is above that value. Should the DSC curve have multiple inflection points, then the midpoint of at least one of the inflection points is above that value.

As explained above, the foam component (a) contains a surfactant. Many surfactants and combinations thereof can be suitable for generation and stabilization of aqueous foams (a) used in this invention. Among these are nonionic surfactants, anionic surfactants and cationic surfactants. Suitable non-ionic surfactants include those based on ethoxylated octylphenol (TRITON™ X series), ethoxylated nonylphenol (TERGITOL™NP series), ethoxylated secondary alkyl alcohols (TERGITOL™TMN and 15-S series), all available from Dow Chemical, and linear alcohol ethoxylates in the Brij series from ICI Americas. The one or more surfactant can be used in amounts of from 0.1 to 50 wt.%, based on the weight of polymer and surfactant, preferably, up to 10 wt.%.

Suitable anionic surfactants include anionic sulfates, sulfonates, phosphates or phosphonates such as sodium lauryl sulfate (e.g. Stanfax-234 from Para-Chem), sodium salts of sulfated fatty alcohol ethoxylates (e.g. Disponil FES-32 from Cognis Corp.), sodium dodecylbenzene sulfonate (e.g. Rhodacal DS-4 from Rhodia Corp.), sodium dioctyl sulfosuccinate (e.g. Aerosol OT-70 from Cytec Industries), ammonium salt of alkyl ethoxylate phosphate (e.g. Rhodacal RS-610 from Rhodia Corp.) and anionic carboxylate salts such as ammonium stearate and potassium oleate (e.g. Stanfax-320 and Stanfax-1 respectively, from Para-Chem). Preferred anionic surfactants are salts of stearic acid, particularly ammonium and potassium salts.

Suitable cationic surfactants include those disclosed in U.S. Patent No. 7,179,845 (Fomo Products Inc.) and in U.S. Patent No. 5,696,174 (Allied Foam Tech Corp).

Preferably, the one or more surfactant is a liquid at use temperature and pressure. However, up to 5 wt.% of a waxy surfactant, such as a stearic acid salt, can be used without adversely affecting the flexibility and compressibility of the foam.

Suitable blowing agents to make the foam component (a) include air, carbon dioxide, nitrogen, low boiling hydrocarbons (e.g., propane, butane, isobutane) and low boiling halocarbons, and lower alkyl ethers (e.g., dimethyl ether). Air or carbon dioxide are preferred.

Optional ingredients in both the (a) and (b) compositions include biocides, rheology modifiers, extenders (fillers), opacifying pigments (mineral and organic (e.g. opaque polymer)), fly ash, dispersants, defoamers, UV stabilizers, colorants, fire retardants, pH adjusters or buffers, coalescents, cosolvents, glass fibers, carbon fibers, microbeads and anti-freeze agents.

While the examples below employ either a simple batch mixer or an aerosol can to make foam, the foam can be made and applied to buildings using various known methods and equipment, for example, the continuous foamer model no. 2M*172 from E.T. Oakes Corp., Hauppauge, N.Y. Other foam generator/applicator equipment include static mixers, as disclosed in U.S. Patents Nos. 5,492,655 (Schuller International Inc.), 4,986,667 (3M), and 6,422,734 (National Gypsum LLC). Still other foam generators include venturi or air eductors to draw and mix air into a fluid stream, such as disclosed in U.S. Patents Nos. 6,010,083 (BetzDearborn Inc.), 6,042,089, and 6,561,438 (Fountainhead Group).

The aqueous foam component (a) can also be dispensed from a pressurized aerosol container, as disclosed in U.S. Patent No. 7,029,609 (Rathor) and references contained therein.

In addition to the materials described above, other materials used in the Examples below are as follows. Foamaster NXZ (defoamer) is available from Cognis Corp. Snowhite 12 (calcium carbonate) is supplied by Omya Inc. Colortrend "F" 888-1045 (colorant) is supplied Degussa Corp. Tamol™ 850 (dispersant) is available from Rohm and Haas Co. Acrysol™ TT-615 (rheology modifier) is available from Rohm and Haas Co. Imsil A-150 is ground silica from Unimin Specialty Minerals Inc. of Elco, IL.

"Comparative example, DAP" is DAP Tex Plus available from DAP Inc. of Baltimore, MD. It is a water-borne foam delivered from an aerosol can, propelled with a mixture of propane, butane and methyl ether. As determined by differential scanning calorimetry (DSC), the multiple Tgs of the DAP Comparative example include a Tg of about 100°C corresponding to a hard polymer. Further, the Dap Comparative example showed a melting point of from 50 to 60 °C, as determined by DSC, corresponding to a waxy solid surfactant.

### Examples 1-8. Foam generation and evaluation.

To 80g of polymer emulsion Rhoplex™ EC-2540 (Tg -10 °C), surfactants were added with gentle mixing. This liquid mixture was placed in the 5L mixing bowl of a Hobart bakery mixer, then whipped on high speed (#3) with the wire whisk attachment for 5 minutes. Density of the resultant foams was measured by scooping foam into a 135 mL paper cup and striking level, then weighing.

To ascertain whether a foam has the ability when dried to be compressed to a thickness of less than 2 mm under a stress of no more than 0.035 MPa , the following test is employed. Foams prepared as above were troweled in a band 50 mm wide and 12 mm thick (2x0.5 inches) onto a flat board. After drying 24 hours, the thickness of the band was measured, and entered into Table 1 as "H24h."

A stiff aluminum plate 75 mm long x 25 mm wide x 3.3 mm thick was laid across the dried foam band, to span the width of the band completely and have a contact area between the plate and foam of 25 mm x 50mm (1x2 inches). Weights were placed onto the plate to give a total weight of 225g, (approx 0.5 lb) creating a pressure of about 0.0035 MPa, and the height of the foam under the plate was measured after 1 minute, and entered into Table 1 as "H225 g." If this value was >2mm, weight was increased to 2.2kg (approx 5lbs) creating a pressure of about 0.035 MPa, the height was measured after 1 minute and entered in Table 1 as "H2.2kg."

**Table 1. Height of foam bands, after drying and compression with weights.**

| Example | Stanfax-320 | 2^{nd} Surfactant | g/mL | H24h | H225g | H2.2kg | Observations |
|---|---|---|---|---|---|---|---|
| 1 | 4.0g | 0 | 0.09 | 5mm | 2mm | | Fine, white foam. |
| 2 | 0 | 4.0g Triton X-405 | 0.11 | 6 | 1.5 | | Some foam cells visible by eye. |
| 3 | 0 | 3.0g Tergitol NP-10 | 0.09 | 4 | 1.3 | | Like #2 |
| 4 | 0 | 4.0g Stanfax-234 | 0.05 | <2 | <1.0 | | faster to foam vs.1, partial collapse. |
| 5 | 2.0 | 1.6g Stanfax-234 | 0.07 | 3 | 1.2 | | |
| 6 | 1.0 | 0.8g Stanfax-234 | 0.08 | 4 | 1.5 | | |
| 7 | 0.4 | 0.8g Stanfax-234 | 0.09 | 3 | 1.0 | | |
| 8 | 0.4 | 1.6 g Stanfax-234 | 0.06 | 2 | 0.9 | | White, textured |
| DAP* | | comparative example | 0.12 | 22 | 16 | 5mm | Expanded in first 24h. When 2.2kg removed, rebounds to 9mm. |

### Examples 9-12. Alternative latexes

Foams were generated from other latexes in the same manner as examples 1-8. Their characteristics are reported in Table 2. Example 11 is a comparative example.

**Table 2. Foams from alternative emulsion polymers. All used 80g of emulsion, 0.8g of Stanfax-234 and 0.8g of Stanfax-320**

| Ex | Emulsion | Tg | g/mL | H24h | H225g | H2.2kg | Observations |
|---|---|---|---|---|---|---|---|
| 9 | Rhoplex™ EC-1791 QS | -40 °C | 0.15 | 5mm | 1.8mm | | Flexible skin on top. |
| 10 | Rhoplex™ MC-1834 | +8 °C | 0.07 | 7 | 4 | 1.1mm | |
| 11 | Rhoplex™ AC-630 | +25 °C | 0.05 | 9 | 6 | 1.8 | Least flexible. |
| 12 | Rovace™ 9100 | +18 °C | 0.05 | 1 | <1.0 | | |

### Example 13. Foam with lower fraction of polymer and a lot of surfactant.

A mixture of 50g of Rhoplex™ EC-2540, 10g of water, 40g of Stanfax-234 and 10g of Stanfax-320 was whipped to a foam as in examples 1-8.

### Example 14. Foam and coating made with same coating composition.

As explained above, we can make a foam composition (a) from the same basic coating composition that is used for coating (b). The advantage of this approach is that one can simply add suitable materials to composition (b) to create a foam (a). In this fashion, one can then make a coating (b) that can be also be used to make a foam (a) with the addition of a few additional ingredients. For example, a coating (b) comprising a mixture of 50 g (wet) of Rhoplex™ EC-2540, 10g of water and 50g of Imsil-150 was blended at low speed for 30 seconds for coating component (b). To make foam (a) from this coating (b), a combination of 1g of Stanfax-234 and 10g of Stanfax-320 was added, and the mixture was whipped to a foam with air as in examples 1-8.

**Table 3. Characteristics of foams from Examples 13 and 14.**

| Ex. | Description | g/mL | H24h | H225g | H2.2kg |
|---|---|---|---|---|---|
| 13 | High surfactant concentration | 0.13 | 1.6mm | 1.6mm | |
| 14 | Inorganic extender in foam | 0.13 | 10 | 6 | 1.8mm |

### Example 15. Foam Properties

**15a.** Flexibility: The foam from example 6, and the comparative DAP foam were cast 6 mm thick in 200x200 mm sheets over a glass fiber mesh on release paper. After drying at least one day, foam strips with mesh were wrapped around cylindrical metal mandrels of various diameters: 100, 50, 25 and 6 mm. Foam of example 6 did not crack on any mandrel; DAP foam cracked on the all the mandrels.
**15b.** Tensile Strength and Elongation: The foam from example 6, and the comparative DAP foam were cast 6mm thick in 200x200 mm sheets on release paper, without any mesh. Samples were cured for 4 days. Using a template, dog bone samples were cut, width of neck region 0.25in (6.35mm) width of grasp points 0.75in (19.05mm). Samples were tested in tension until fracture, at a position rate of 2.0in/min (50.8mm/min). Fracture is defined by formation of two independent pieces of material, that are in no way connected to one another. For Example 6, the maximum tensile strength of 0.045 MPa at 2750% elongation. For DAP, the maximum strength of 0.02 MPa occurred at 100% elongation.

| **Tensile Strength & Elongation** | Example 6 Foam | DAP Comp. |
|---|---|---|
| Yield Strength (MPa) | 0.01 | 0.015 |
| % Elongation @ Yield | 180 | 50 |
| Max Strength (MPa) | 0.045 | 0.02 |
| % Elongation @ Max Strength | 2750 | 400 |
| Break Strength (MPa) | 0.04 | 0.00 |
| % Elongation @ Break | 3000 | 175 |

**15c.** Creep resistance in compression: Sheets of foam were cast on release paper. to an initial thickness of 12mm (and 50mm wide and 200 mm long), and dried at least one day. A stiff aluminum plate weighing 2.5 grams (40mm x 40 mm x 0.66mm thick) was placed on each sheet. Weights were applied on the aluminum plate to compress its thickness, and the decrease in thickness was measured over time. To experience a similar compressive creep as the comparative example, the inventive foam Example 6 required less than one tenth as much weight.

| | Foam Ex. 6 | Foam Ex. 6 | DAP | DAP |
|---|---|---|---|---|
| Initial Height t=t_{o (MM)} | 10.58 | 8.44 | 12.94 | 12.8 |
| **Weight applied (g)** | **7g** | **20g** | **400g** | **800g** |
| **% Compression over time** | | | | |
| t=30min | 18% | 33% | 18% | 31% |
| 60min | 24% | 29% | 25% | 38% |
| 90min | 24% | 28% | 31% | 39% |
| 120min | 29% | 28% | 32% | 40% |
| 45h | 40% | 43% | 41% | 52% |

The significant of this compressibility is that decorative cladding can easily be applied over foams used in this invention without the cladding being distorted by not being able to compress the foam that might be protruding from the exterior sheathing joints.

### Example 16. A liquid building coating:

| **Material** | **Part by Weight** |
|---|---|
| Water | 9.5 |
| Propylene Glycol | 0.67 |
| Tamol™ 850 | 0.26 |
| Triton x-405 | 3.4 |
| Foamaster NXZ | 0.15 |
| Rhoplex™ EC 2540 | 37.14 |
| Begin Grind | |
| Snowhite 12 | 47.91 |
| Foamaster NXZ | 0.15 |
| Colortrend "F" 888-1045 | |
| Red Iron Oxide | 0.12 |
| Aqueous Ammonia (28%) | 0.17 |
| Acrysol™ TT-615 | 0.53 |
| Total | 100 |

The above recipe was made on a 5000 g scale. During the initial weigh out, materials were added in order one at a time to a grind pot. Following each addition, the contents of the pot were briefly agitated by swirling. After the addition of Rhoplex™ EC-2540 the grind pot was transferred from the bench top and placed on the Cowles™ high speed disperser to mix and grind ingredients. Snowhite 12 was slowly added to ensure good dispersion. Agitator speed was initially set to 1000 rpm and was increased with addition of the Snowhite 12 to approximately 1300 rpm. Foamaster NXZ was added immediately following the Snowhite 12 addition, and the grind was held for 5 minutes for full incorporation. Following the addition of the Acrysol™ TT-615, the grind was held for 20 minutes. During this time the agitator speed was increased to between 2000-3000 rpm depending on conditions. Grind was filtered with 100mesh and de-aired using a vacuum canister and agitator.

### Example 17. Impact resistance of coated foam.

Sheets of foam were prepared as in example 15b. After the foam dried for 2 days, the coating of example 16 was applied by brush in 2 coats over the foam with 2 hours of drying between coats then dried overnight, to a final coating thickness of approximately 15 dry mils (0.38 mm). After drying overnight, the coated foam was subjected to a falling dart impact tester, of 908g (2lb) weight and 12mm (0.5 inch) spherical tip. The dart was dropped on a fresh area of coated foam resting on a hard flat board from progressively higher heights, until the coating was visibly torn. The coated foam of Example 6 passed to 430mm (17 inches) and failed 480 mm (19 inches). Comparative example DAP failed at the lowest height, 12 mm (0.5 inches).

### Example 18. Preparation of sheathing test joint.

Two 150x75 mm rectangles of oriented strand board ("OSB") were clamped to a board such that the 150mm sides were parallel but 6mm apart, forming an open, 6 mm-wide gap between the adjacent rectangles. Such a gap simulates those found between sheets of exterior sheathing in residential and commercial building under construction.

A band of foam of example 6 was applied 50mm wide and 12 mm thick when wet over and across the gap and dried overnight to form a foam bridge approx 3 mm thick. The coating of example 16 was then applied across the joint and over the OSB rectangles by brush in 2 coats with 2 hours of drying between coats then dried overnight, to a final coating thickness of approximately 15 dry mils (0.38 mm). The clamps were removed to free the rectangles from the supporting board to provide a test joint spanned by foam and entirely covered by the coating. Due to the foam in the joint, the center of the coated joint was only approximately 2mm higher than the plane of the coated OSB outside the area which had received the band of foam. However, the foam could be flattened even further with gentle finger pressure. Multiple samples of these joints were used in the following water tightness test.

### Example 19. Water tightness of the joint.

One open end of a 80 cm-long section of 7.5 cm diameter PVC pipe was placed over the a test joint of Example 18 such that the coated, foamed joint crossed the diameter of the pipe end. The open end of the pipe was sealed to the test joint with silicone sealant. After the silicone cured, the pipe was filled approx 2.5 cm deep with water, and the bottom of the joint was periodically checked for leaks. After 24 hours, no water could be detected beneath the joint.

The water was emptied and the assembly was dried 24 hours. It was then filled to a depth of 55 cm to provide a head pressure of water over the joint. At 5 hours, no leaks were detected.

**Example 20 Foam from aerosol can.** A mixture of 95g of Rhoplex™ EC-2540, 4g of Stanfax-320 and 1g of Stanfax-234 was placed into a an aluminum can (200 mL are available from McKernan Packaging Clearinghouse of Reno, NV) which was closed with a bottle closure (Body Orifice #062, Stem Orifice #018 and a Spout # S20L7, all available from Seaquist Perfect Dispensing of Cary, IL). The can was then charged with 2.0g of propane and 4.0g of n-butane. The can was shaken for 30 sec, inverted and the trigger depressed, to dispense a foam of similar properties as in example #1 above. Optionally, a flexible hose was affixed to the can spout before dispensing to allow the stream of foam to be directed into and over a joint between OSB boards. As a further option, a flattened funnel (opening 42mm wide x 4mm thick) was affixed to the end of the flexible hose, allowing a band of foam to be applied over the gap in a rapid single pass.

### Examples 21-22. Dimensional stability of aqueous foam from an aerosol can.

Aerosol cans as in Example 20 were filled with the following recipes, then were kept on a shelf for 3 months to monitor their storage stability.

| | Ex 21 | Ex 22 |
|---|---|---|
| Rhoplex™ EC-2540 | 100g | - |
| Rhoplex™ 1791 QS | - | 100g |
| Stanfax-320 | 7.25 | 6.75 |
| Propane | 10 | 5.7 |
| Butane | 0 | 2.0 |

After storage, foams were discharged and troweled into a band 50 mm wide and 12 mm thick on a flat board and the thickness of the band was measured periodically for 24 hours, after which no further thickness changes were seen. All foams expanded in size for approximately 2 hours after the time of application. Overnight, the foams which are suitable as a component of the invention reduced to 25% of their as-applied thickness or less. The comparative DAP example continued to expand beyond the 2 hour mark, and its ultimate thickness was about double its as-applied thickness.

| Time after discharge | Ex. 21 | Ex. 22 | DAP Comp |
|---|---|---|---|
| 30 min | 15.4mm | 15.9mm | 17.4mm |
| 45 | 15.7 | 15.8 | 18.5 |
| 60 | 15.6 | 15.5 | 19.3 |
| 90 | 15.6 | 15.6 | 20.4 |
| 120 | 15.3 | 15.2 | 21.2 |
| 24 hours | 3.0 | 2.0 | 24.3 |

## Claims

1. A method of making a weather-resistive barrier on a building under construction that employs adjacent sheets of wood, cement or gypsum exterior sheathing on a structural frame with gaps between the sheets, comprising:
(a) applying a foamed composition comprising one or more aqueous emulsion polymer to the gaps wherein the composition comprises an aqueous emulsion polymer selected from any of acrylics, vinyl acetate-acrylics, styrene-acrylics, ethylene-vinyl acetates, styrene-butadienes and polyurethane dispersions, a surfactant, water and a blowing agent wherein a wet, freshly applied 12 mm thick and 50 mm wide band of the foamed composition has the ability when dried to be compressed to a thickness of not more than 3 mm under a stress of not more than 0.035 MPa; and
(b) applying an aqueous polymeric coating comprising a polymer chosen from any of acrylics, vinyl acetate-acrylics, styrene-acrylics, ethylene-vinyl acetates, styrene-butadienes and polyurethane dispersions over the sheathing and the foamed composition wherein the polymeric coating has a density when dried of greater than 0.7 g/ml
wherein the one or more polymer in the foamed composition (a) consists essentially of an aqueous emulsion polymer with a Tg less than 25°C as determined by differential scanning calorimetry ("DSC"), in accordance with ASTM E-135691, where polymer samples are run on a TA Instruments Q-1000 DSC calorimeter at a ramp rate of between 10° to 20°C/min., in a nitrogen atmosphere, ramping from -90°C to 150°C two times, and taking the midpoint inflection from the second heating ramp.

2. The method of claim 1 further comprising installing a decorative cladding over the coated sheathing.

3. The method of claim 1 wherein composition (b) further comprises a polyfunctional amine or a polyethyleneimine.

4. The method as claimed in claim 1, wherein the foamed composition (a) and coating composition (b) comprise the same one or more polymer.

5. The method as claimed in claim 1, wherein the surfactant is a liquid at use temperature.

## Patentansprüche

1. Ein Verfahren zum Herstellen einer wetterbeständigen Abdeckung auf einem Neubau, das benachbarte Platten von Holz-, Zement- oder Gipsaußenverkleidung auf einem Strukturrahmen mit Lücken zwischen den Platten einsetzt, beinhaltend:
(a) Auftragen einer aufgeschäumten Zusammensetzung, beinhaltend ein oder mehrere wässrige Emulsionspolymere, auf die Lücken, wobei die Zusammensetzung ein wässriges Emulsionspolymer, ausgewählt aus beliebigem von Acrylverbindungen, Vinylacetatacrylverbindungen, Styrolacrylverbindungen, Ethylenvinylacetaten, Styrolbutadienen und Polyurethandispersionen, ein Tensid, Wasser und ein Treibmittel, beinhaltet, wobei ein feuchtes, frisch aufgetragenes, 12 mm dickes und 50 mm breites Band der aufgeschäumten Zusammensetzung die Fähigkeit besitzt, wenn getrocknet, unter einer Beanspruchung von nicht mehr als 0,035 MPa auf eine Dicke von nicht mehr als 3 mm komprimiert zu werden; und
(b) Auftragen einer wässrigen Polymerbeschichtung, beinhaltend ein Polymer, gewählt aus beliebigem von Acrylverbindungen, Vinylacetatacrylverbindungen, Styrolacrylverbindungen, Ethylenvinylacetaten, Styrolbutadienen und Polyurethandispersionen, über die Verkleidung und die aufgeschäumte Zusammensetzung, wobei die Polymerbeschichtung, wenn getrocknet, eine Dichte von mehr als 0,7 g/ml aufweist
wobei das eine oder die mehreren Polymere in der aufgeschäumten Zusammensetzung (a) im Wesentlichen aus einem wässrigem Emulsionspolymer mit einer Tg von weniger als 25 °C bestehen, wie bestimmt durch Differentialscanningkalorimetrie ("DSC"), gemäß ASTM E-135691, wobei Polymerproben auf einem TA-Insruments-Q-1000-DSC-Kalorimeter mit einer Rampenrate zwischen 10 °C bis 20 °C/min, in einer Stickstoffatmosphäre, unter zweimaligem rampenförmigem Übergang von -90 °C bis 150 °C, und Nehmen des Wende-Mittelpunkts von der zweiten Erwärmungsrampe untersucht werden.

2. Verfahren gemäß Anspruch 1, das ferner das Installieren einer dekorativen Verschalung über der beschichteten Verkleidung beinhaltet.

3. Verfahren gemäß Anspruch 1, wobei Zusammensetzung (b) ferner ein polyfunktionelles Amin oder ein Polyethylenimin beinhaltet.

4. Verfahren gemäß Anspruch 1, wobei die aufgeschäumte Zusammensetzung (a) und die Beschichtungszusammensetzung (b) das gleiche eine oder die gleichen mehreren Polymere beinhalten.

5. Verfahren gemäß Anspruch 1, wobei das Tensid bei Verwendungstemperatur eine Flüssigkeit ist.

## Revendications

1. Un procédé de fabrication d'une barrière résistant aux intempéries sur un bâtiment en construction qui se sert de feuilles adjacentes de revêtement extérieur en bois, en ciment ou en plâtre sur un cadre structurel avec des espaces entre les feuilles, comprenant :
(a) l'application d'une composition expansée comprenant un ou plusieurs polymères en émulsion aqueuse sur les espaces, dans lequel la composition comprend un polymère en émulsion aqueuse sélectionné parmi des éléments quelconques d'entre des acryliques, des acétates de vinyle-acryliques, des styrènes-acryliques, des éthylènes-acétates de vinyle, des styrènes-butadiènes et des dispersions de polyuréthane, un tensioactif, de l'eau et un agent gonflant, dans lequel une bande humide, récemment appliquée de 12 mm d'épaisseur et de 50 mm de largeur de la composition expansée a la capacité, quand elle est séchée, d'être comprimée jusqu'à une épaisseur ne dépassant pas 3 mm sous une contrainte ne dépassant pas 0,035 MPa ; et
(b) l'application d'un enduit polymère aqueux comprenant un polymère choisi parmi des éléments quelconques d'entre des acryliques, des acétates de vinyle-acryliques, des styrènes-acryliques, des éthylènes-acétates de vinyle, des styrènes-butadiènes et des dispersions de polyuréthane par-dessus le revêtement et la composition expansée, dans lequel l'enduit polymère a une masse volumique, quand il est séché, de plus 0,7 g/ml
dans lequel les un ou plusieurs polymères dans la composition expansée (a) consistent essentiellement en un polymère en émulsion aqueuse avec une Tg de moins de 25 °C telle que déterminée par calorimétrie différentielle à balayage (« DSC »), conformément à l'ASTM E-135691, où des échantillons de polymère sont passés sur un calorimètre DSC Q-1000 de TA Instruments à une vitesse de montée comprise entre 10 °C à 20 °C/min., dans une atmosphère azotée, en montant de -90 °C à 150 °C deux fois, et en prenant l'inflexion de point milieu de la deuxième montée en température.

2. Le procédé de la revendication 1 comprenant en sus l'installation d'un bardage décoratif par-dessus le revêtement enduit.

3. Le procédé de la revendication 1 dans lequel la composition (b) comprend en sus une amine polyfonctionnelle ou une polyéthylèneimine.

4. Le procédé tel que revendiqué dans la revendication 1, dans lequel la composition expansée (a) et la composition d'enduit (b) comprennent les mêmes un ou plusieurs polymères.

5. Le procédé tel que revendiqué dans la revendication 1, dans lequel le tensioactif est un liquide à température d'utilisation.
